# EUROPEAN PATENT APPLICATION

(11) **EP 3 199 497 A1**
(43) Date of publication of application: **02.08.2017**
(21) Application number: 16173933.9
(22) Date of filing: 10.06.2016
(51) Int. Cl.: C02F 9/00, C02F 1/52, C02F 1/38, C02F 1/72, C02F 1/66, C02F 103/10

(54) **METHOD OF PRODUCING DRILLING FLUIDS FROM WASTEWATER OBTAINED DURING SHALE GAS EXTRACTION**

(30) Priority: 26.01.2016 PL 41591116
(71) Applicant: Politechnika Lubelska, 20-618 Lublin (PL); Uniwersytet Przyrodniczy, 20-950 Lublin (PL)
(72) Inventor: PAWLOWSKI, Lucjan, 20-710 Lublin (PL); PAWLOWSKI, Artur, 20-710 Lublin (PL); PAWLOWSKA, Malgorzata, 20-710 Lublin (PL); BARAN, Stanislaw, 20-448 Lublin (PL); ZUKOWSKA, Grazyna, 20-282 Lublin (PL); KWIATKOWSKI, Zygmunt, 21-003 Ciecierzyn (PL)
(74) Representative: Kaminski, Piotr

(57) **Abstract**

A method of producing hydraulic fracturing fluid from wastewater obtained during the shale gas extraction is disclosed wherein H₂O₂ is added to the flowback water which is then mixed until the redox potential of 700-720 mV is achieved; then the 5% Ca(OH)₂ suspension in 10% solution of NaCO₃ is added and intensively mixed to obtain pH of 11.15 ± 0.15, the precipitate is then separated by a known method, most preferably by means of a centrifuge.

## Description

The object of the invention is the method of producing drilling fluids from wastewater obtained during shale gas extraction.

In shale gas extraction, large amounts of water are used for the production of drilling and fracturing fluids. This high water consumption negatively impacts the local water economy. Therefore, looking for new water resources is important for the development of shale gas extraction. Solutions which are pumped during hydraulic fracturing subsequently resurface, enriched with the compounds washed out from the deposit, in the form of flowback and produced water in the first and second stage, respectively. Recovery of water from flowback and produced water and utilizing it for the production of drilling fluids would reduce the anthropogenic impact of shale gas mining on the aquatic environment. High salinity is a characteristic feature of flowback and produced waters. In the case of flowback water, salinity amounts to 50g/L to 260 g/L, whereas in the case of produced water, it ranges from 50g/L to 160 g/L.

The patents US 5520816A, WO 2013151578A, and WO 2014028832A1 contain descriptions of recovering water from flowback and produced waters, relying on their desalination by means of membrane or thermal methods. These methods enable the recovery of water of high purity, suitable for numerous applications, but require huge investments in the construction of complex installations, which are also costly in operation.

Due to the fact that shale gas is exploited in field conditions only for a certain period of time, it is necessary to transport large amounts of flowback and produced waters to a water recovery station. The use of simplified installations, which are easily assembled in the proximity of wellbores and hydraulic fracturing location, is more beneficial. The recovery of water should be conducted in such a way that would enable to use it directly for the production of drilling fluids.

The essence of the method for production of drilling fluids from wastewater obtained during shale gas extraction is that 20% H₂O₂ is mixed with flowback water until the redox potential of 700-720 mV is achieved; afterwards, the 5% Ca(OH)₂ suspension in 10% solution of NaCO₃ is added and intensively mixed to obtain pH = 11.15 ± 0.15. The precipitate is separated by known method, most preferably by means of a centrifuge.

The advantage of this invention is the recovery of water from the flowback and produced waters, obtained during shale gas extraction, and their re-use for the preparation of drilling fluids, obtained by adding appropriate chemicals, depending on the type of drilling fluid.

### Example

### Preparation of bentonite drilling fluid.

The 20% solution of H₂O₂ was added to a tank containing 7600m³ of flowback water and mixed until the redox potential of 720mV was achieved. The volume of H₂O₂ amounted to 23.7m³. Afterwards, 5% Ca(OH)₂ suspension in 10% solution of Na₂CO₃ was added and mixed intensively until pH = 11.2 was obtained. The amount of added suspension equaled 70 m³. After the suspension was separated in a centrifuge, the salinity of clarified water reached 67500 mg/L. This water was used for the preparation of bentonite drilling fluid by adding 434.5 Mg of bentonite; 826 Mg of barite; 10.7 Mg of sodium hydroxide; 4.48 Mg of sodium carbonate; 223.7 Mg of carboxymethylcellulose sodium salt of high viscosity; 587.4 Mg of carboxymethylcellulose sodium salt of low viscosity.

## Claims

1. method of producing drilling fluids from wastewater obtained during shale gas extraction **characterized by** the addition of 20% H₂O₂ to the flowback water which is then mixed until the redox potential of 700-720 mV is achieved; then the 5% Ca(OH)₂ suspension in 10% solution of NaCO₃ is added and intensively mixed to obtain pH of 11.15 ± 0.15, the precipitate is then separated by a known method, most preferably by means of a centrifuge.
